# EUROPEAN PATENT APPLICATION

(11) **EP 2 600 667 A1**
(43) Date of publication of application: **05.06.2013**
(21) Application number: 11812555.8
(22) Date of filing: 28.07.2011
(51) Int. Cl.: H04W 64/00, H04W 24/02

(54) **MOBILE COMMUNICATION METHOD, POSITIONING DEVICE AND WIRELESS BASE STATION**

(30) Priority: 30.07.2010 JP 2010172803
(71) Applicant: NTT DOCOMO, INC., Chiyoda-ku Tokyo 100-6150 (JP)
(72) Inventor: NISHIDA, Katsutoshi, Tokyo 100-6150 (JP); HAPSARI, Wuri Andarmawanti, Tokyo 100-6150 (JP); ISHII, Minami, Tokyo 100-6150 (JP); TAKAHASHI, Hideaki, Tokyo 100-6150 (JP)
(74) Representative: HOFFMANN EITLE
(86) International application number: PCT/JP2011/067230
(87) International publication number: WO 2012/014966

(57) **Abstract**

The present invention allows eNB information to be easily acquired from an eNB (20), which has been newly installed or whose setting contents have been changed. A mobile communication method of the present invention is a mobile communication method for an E-SMLC (40) provided with a storage section that stores eNB information indicating setting contents of the eNB information to perform positioning processing for a user terminal located in a cell formed by the eNB (20) based on the eNB information stored in the storage section, the method including a step of the E-SMLC (40) acquiring eNB information sent from an eNB (20), which has been newly installed or whose setting contents have been changed, and a step of the E-SMLC (40) updating the radio base station information stored in the storage section so as to reflect the acquired eNB information.

## Description

### Technical Field

The present invention relates to a mobile communication method, a positioning apparatus and a radio base station that perform positioning processing for a user terminal located in a cell formed by the radio base station based on radio base station information indicating setting contents of the radio base station.

### Background Art

In 3GPP, studies are being carried out on a mobile communication system that performs positioning for a user terminal such as a mobile phone terminal and realizes an LCS (Location Service) that provides position information of the user terminal (e.g., Non-Patent Literature 1).

In such an LCS, an E-SMLC (Evolved Serving Mobile Location Centre) stores radio base station information (e.g., latitude/longitude, tilt angle or the like of the radio base station) indicating setting contents of the radio base station and performs cell-based positioning processing for the user terminal using the radio base station information.

### Citation List

### Non-Patent Literature

Non-Patent Literature 1: 3GPP TS23.271

### Summary of Invention

### Technical Problem

In recent years, there are a growing number of cases where a radio base station such as a femto base station is newly installed for spots like indoor spots where radio quality is likely to deteriorate. Furthermore, along with the installation of a new radio base station, there are also an increasing number of occasions on which setting contents of an existing radio base station are changed. For this reason, there is a demand for a mechanism whereby the E-SMLC can easily acquire radio base station information from a radio base station, which has been newly installed or whose setting contents have been changed,.

The present invention has been implemented in view of such circumstances and it is an object of the present invention to provide a mobile communication method, a positioning apparatus and a radio base station capable of easily acquiring radio base station information from a radio base station, which has been newly installed or whose setting contents have been changed,.

### Solution to Problem

A mobile communication method according to a first aspect of the present invention is a mobile communication method for a positioning apparatus including a storage section configured to store radio base station information indicating setting contents of a radio base station to perform positioning processing for a user terminal located in a cell formed by the radio base station based on the radio base station information stored in the storage section, the mobile communication method including the steps of: acquiring, at a positioning apparatus, radio base station information sent from a radio base station which has been newly installed or whose setting contents have been changed, and updating, at the positioning apparatus, the radio base station information stored in the storage section so as to reflect the acquired radio base station information.

According to this configuration, the positioning apparatus can easily acquire radio base station information from the radio base station, which has been newly installed or whose setting contents have been changed, and can update the radio base station information stored in the storage section based on the acquired radio base station information. Therefore, the positioning apparatus can maintain radio base station information stored in the storage section updated to the latest version and can more accurately perform positioning processing for the user terminal which is performed based on such radio base station information.

A positioning apparatus according to a second aspect of the present invention is a positioning apparatus including a storage section configured to store radio base station information indicating setting contents of a radio base station and a positioning processing section configured to perform positioning processing for a user terminal located in a cell formed by the radio base station based on the radio base station information stored in the storage section, wherein the positioning apparatus includes an acquiring section configured to acquire radio base station information sent from a radio base station, which has been newly installed or whose setting contents have been changed" and an updating section configured to update the radio base station information stored in the storage section so as to reflect the acquired radio base station information.

A radio base station according to a third aspect of the present invention is a radio base station in a mobile communication system in which a positioning apparatus including a storage section configured to store radio base station information performs positioning processing for a user terminal based on the radio base station information stored in the storage section, wherein upon detecting that the radio base station has been newly installed or setting contents thereof have been changed, the radio base station is configured to send radio base station information indicating the setting contents of the radio base station to the positioning apparatus.

### Advantageous Effects of Invention

According to the present invention, it is possible to provide a mobile communication method, a positioning apparatus and a radio base station capable of easily acquiring radio base station information from a radio base station, which has been newly installed or whose setting contents have been changed,.

### Brief Description of Drawings

FIG.1 is a schematic block diagram of a mobile communication system according to a first embodiment;
FIG.2 is a function block diagram of an E-SMLC according to the first embodiment;
FIG.3 is a schematic diagram illustrating an eNB information acquiring operation according to the first embodiment;
FIG.4 is a sequence diagram illustrating a first eNB information acquiring operation according to the first embodiment;
FIG.5 is a sequence diagram illustrating a second eNB information acquiring operation according to the first embodiment;
FIG.6 is a sequence diagram illustrating an eNB information acquiring operation according to modification example 1;
FIG.7 is a sequence diagram illustrating an eNB information acquiring operation according to modification example 2;
FIG.8 is a schematic diagram illustrating an eNB information acquiring operation according to a second embodiment;
FIG.9 is a sequence diagram illustrating a first eNB information acquiring operation according to the second embodiment; and
FIG.10 is a sequence diagram illustrating a second eNB information acquiring operation according to the second embodiment.

### Description of Embodiments

Hereinafter, embodiments of the present invention will be described in detail with reference to the accompanying drawings.

### [First embodiment]

### <Schematic configuration of mobile communication system>

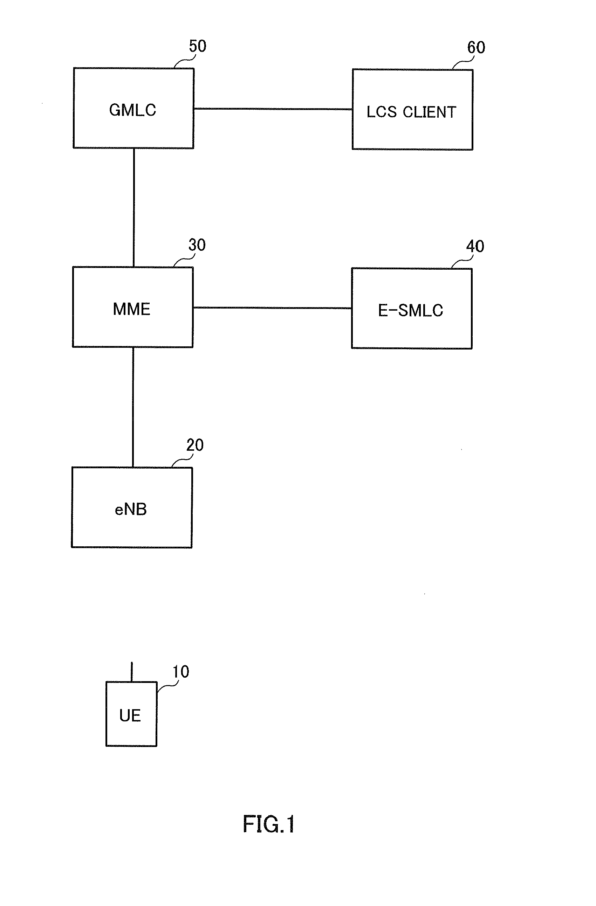

FIG.1 is a schematic block diagram of a mobile communication system according to a first embodiment. As shown in FIG.1, the mobile communication system according to the first embodiment is constructed of a UE (User Equipment) 10, an eNB (eNodeB) 20, an MME (Mobility Management Entity) 30, an E-SMLC (Evolved Serving Mobile Location Centre) 40, a GMLC (Gateway Mobile Location Centre) 50 and an LCS (Location Service) client 60.

The UE 10 is a user terminal such as a mobile phone terminal or notebook personal computer.

The eNB 20 is a radio base station that forms a cell and performs radio communication with the UE 10 located in the formed cell. The eNB 20 may be a radio base station that forms a macro cell having a radius of several kilometers or may be a radio base station that forms a micro cell having a radius of several hundred meters or may be a femto base station that forms a femto cell having a radius of on the order of 10 meters. Furthermore, the eNB 20 may also be provided with a function of the LCS client 60.

The MME 30 is a mobile management apparatus having a signal transfer function between the eNB 20 and the E-SMLC 40 which will be described later and a function of requesting the E-SMLC 40 to perform positioning for the UE 10 in response to a positioning request from the GMLC 50 and acquiring position information of the UE 10.

The E-SMLC 40 is a positioning apparatus that performs cell-based positioning processing for the UE 10 based on eNB information (which will be described later) of the eNB 20 stored in the E-SMLC 40. The E-SMLC 40 sends/receives a positioning-related signal for cell-based positioning processing to/from the eNB 20 using LPPa (LTE Positioning Protocol Annex).

The GMLC 50 is a gateway apparatus having a function of requesting the MME 30 to perform positioning for the UE 10 in response to a positioning request from the LCS client 60 and a function of sending position information of the UE 10 acquired from the E-SMLC 40 via the MME 30 to the LCS client 60.

### <Function configuration of E-SMLC>

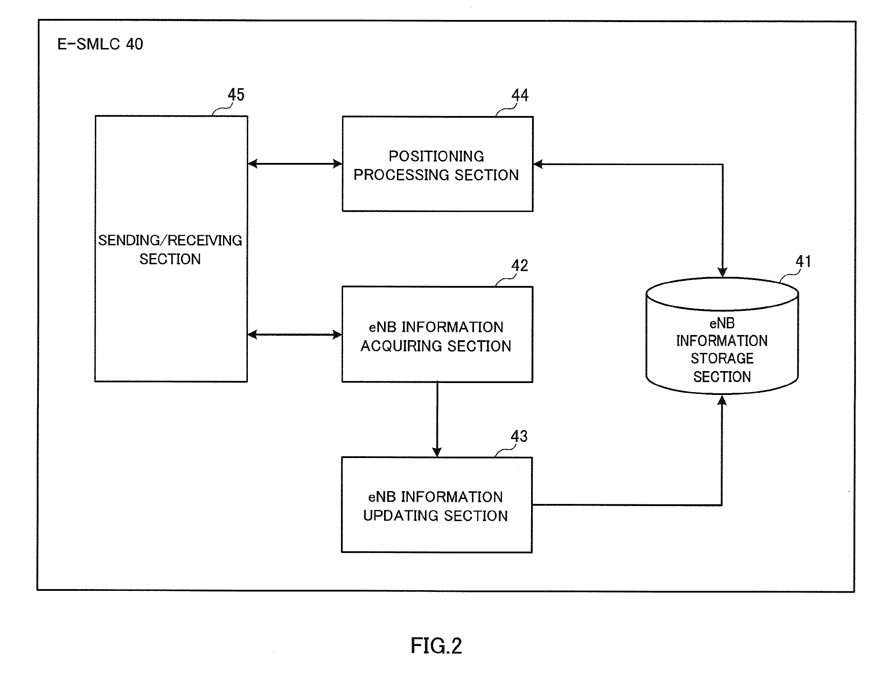

FIG.2 is a function block diagram of the E-SMLC according to the first embodiment. The E-SMLC 40 has hardware including a communication interface, a processor, a memory, and a transmission/reception circuit or the like, and the memory stores software modules to be executed by the processor. The following function configuration of the E-SMLC 40 may be implemented by the aforementioned hardware or implemented by software modules executed by the processor or may be implemented by a combination of the two.

As shown in FIG.2, the E-SMLC 40 includes an eNB information storage section 41, an eNB information acquiring section 42, an eNB information updating section 43, a positioning processing section 44 and a sending/receiving section 45.

The eNB information storage section 41 (storage section) stores eNB information of the eNB 20. Here, the eNB information (radio base station information) refers to information indicating setting contents of the eNB 20 and includes, for example, at least one of a cell identifier, latitude, longitude, tilt angle, error radius of the eNB 20.

The eNB information acquiring section 42 (acquiring section) acquires eNB information from the eNB 20 which has been newly installed or whose setting contents have been changed. To be more specific, the eNB information acquiring section 42 requests the eNB 20 which has been newly installed or whose setting contents have been changed to send eNB information, and acquires eNB information sent from the eNB 20 in response to the request. The eNB information acquiring section 42 may also acquire eNB information spontaneously sent from the eNB 20.

The eNB information updating section 43 (updating section) updates the eNB information storage section 41 based on the eNB information acquired by the eNB information acquiring section 42. To be more specific, the eNB information updating section 43 updates the eNB information stored in the eNB information storage section 41 so as to reflect the eNB information acquired by the eNB information acquiring section 42.

The positioning processing section 44 performs positioning processing for the UE 10 located in the cell of the eNB 20 based on the eNB information of the eNB 20 stored in the eNB information storage section 41. To be more specific, the positioning processing section 44 acquires the eNB information of the of eNB 20, in the service area of which the UE 10 is located from the eNB information storage section 41 in response to a positioning request from the GMLC 50 received by the sending/receiving section 45 which will be described later, and calculates position information of the UE 10 based on the acquired eNB information (e.g., at least one of a cell identifier, latitude, longitude, tilt angle, error radius or the like). In such a calculation of the position information of the UE 10, positioning-related information of the UE 10 acquired from the eNodeB or UE 10 or the like may also be used.

The sending/receiving section 45 (sending section, receiving section) sends/receives LPPa data or the like to/from the eNB 20 via the MME 30. To be more specific, the sending/receiving section 45 receives an eNB information update notification (update notification signal) sent from the eNB 20 which has been newly installed or whose setting contents have been changed. Here, the eNB information update notification is intended to notify, when the eNB 20 has been newly installed, that the eNB information has been newly installed or when setting contents of the eNB 20 have been changed, that the eNB information has been updated.

Furthermore, the sending/receiving section 45 sends an eNB information sending request (sending request signal) for requesting the eNB 20 which has been newly installed or whose setting contents have been changed to send eNB information in response to a request from the eNB information acquiring section 42.

When a positioning event occurs in the UE 10 or network apparatus (e.g., LCS client 60), the sending/receiving section 45 receives a request to perform positioning for the UE 10 from the MME 30 and sends position information of the UE 10 calculated in the positioning processing section 44 to the MME 30 in response to the positioning request.

### <Operation of mobile communication system>

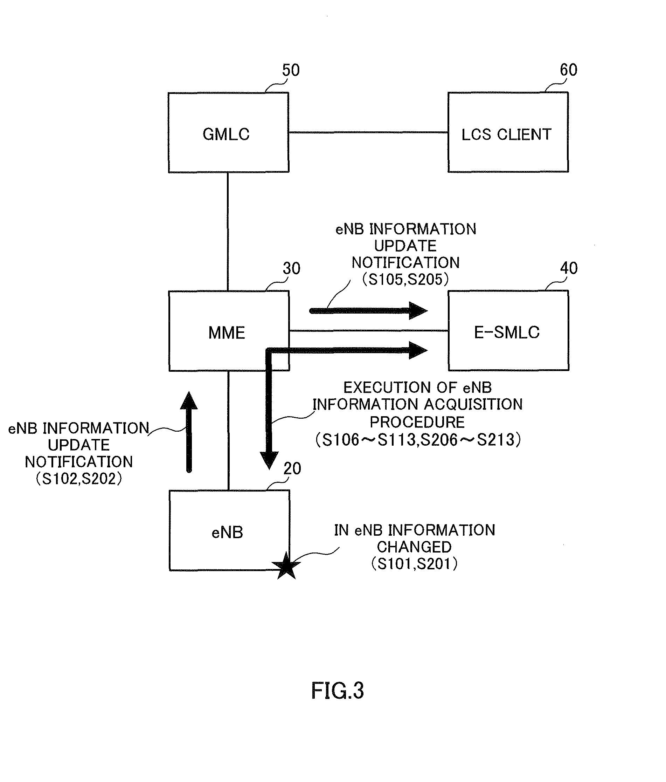

Next, an eNB information acquiring operation in the mobile communication system according to a first embodiment configured as shown above will be described with reference to FIG.3 to FIG.5.

FIG.3 is a schematic diagram illustrating the eNB information acquiring operation according to the first embodiment. In the first embodiment, the eNB 20 does not store any "E-SMLC ID" which is identification information of the E-SMLC 40. For this reason, as shown in FIG.3, in the first embodiment, the eNB 20 sends an eNB information update notification indicating that eNB information has been newly set or updated to the MME 30. The MME 30 transfers the eNB information update notification from the eNB 20 to the E-SMLC 40 specified by the MME 30. The E-SMLC 40 executes an eNB information acquiring procedure together with the eNB 20 in response to the eNB information update notification from the MME 30.

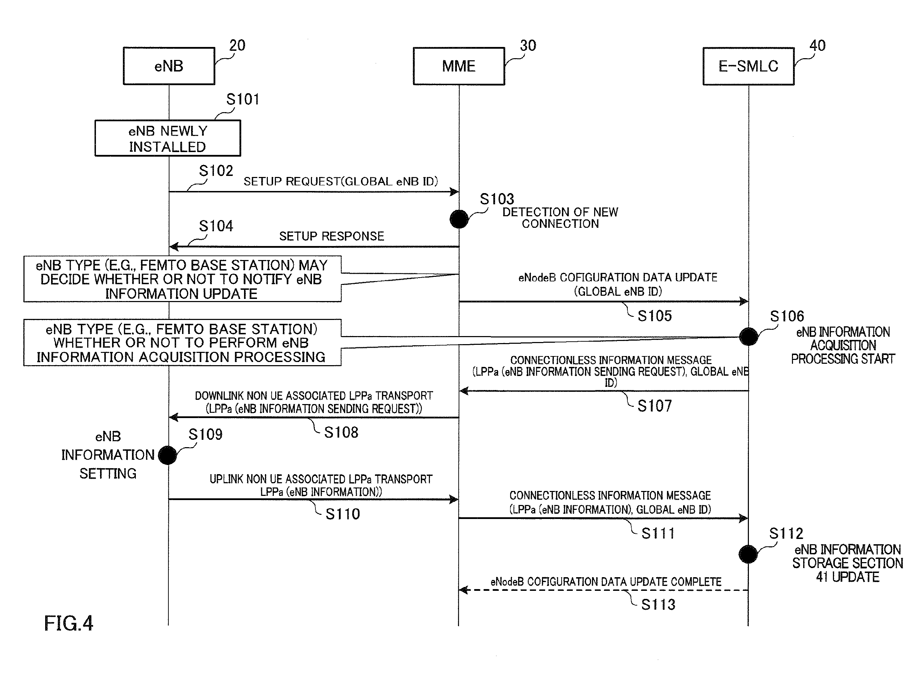

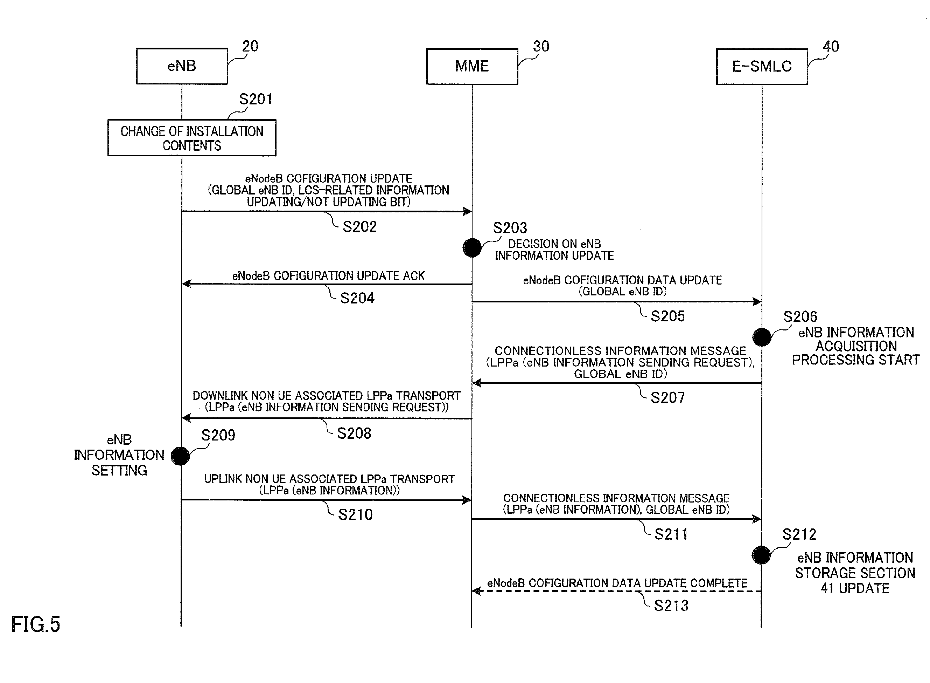

Hereinafter, the eNB information acquiring operation according to the first embodiment will be described in detail with reference to FIG.4 and FIG.5. Suppose identical reference numerals in FIG.3 to FIG.5 denote identical steps.

FIG.4 is a sequence diagram illustrating an operation of acquiring eNB information from the newly installed eNB 20. As shown in FIG.4, when the eNB 20 has been newly installed, the eNB 20 newly sets eNB information containing at least one of a longitude, latitude and tilt angle of the eNB 20 (step S101).

The eNB 20 sends an eNB information update notification for notifying the MME 30 that the eNB information has been newly set (step S102). For example, the eNB 20 may send the above eNB information update notification to the MME 30 using "Setup Request" indicating that the eNB 20 has been newly installed. "Setup Request" includes a "Global eNB ID" which is identification information of the eNB 20.

The MME 30 detects that the eNB 20 has been newly connected to the MME 30 in response to the eNB information update notification from the eNB 20 (step S103).

The MME 30 sends a "Setup Response" in response to the "Setup Request" to the eNB 20 (step S104).

The MME 30 transfers the eNB information update notification received from the eNB 20 to the E-SMLC 40 (step S105). For example, the eNB 20 may transfer the above eNB information update notification to the E-SMLC 40 using "eNodeB Configuration Data Update" including a "Global eNB ID." The MME 30 may transfer the eNB information update notification received from the eNB 20 to the E-SMLC 40 in accordance with the eNB type indicating the type of the eNB 20. For example, when the eNB type of the eNB 20 according to the eNB information update notification is a femto base station, the MME 30 transfers the eNB information update notification, and when the eNB type is not a femto base station, the MME 30 may stop transferring the eNB information update notification.

The E-SMLC 40 starts eNB information acquiring processing in response to the eNB information update notification from the MME 30 (step S106). The E-SMLC 40 may start the eNB information acquiring processing in accordance with the eNB type of the eNB 20. For example, when the eNB type of the eNB 20 according to the eNB information update notification is a femto base station, the E-SMLC 40 may start eNB information acquiring processing for the eNB 20, and when the eNB type is not a femto base station, the E-SMLC 40 may stop the eNB information acquiring processing for the eNB 20.

The E-SMLC 40 sends an eNB information sending request for requesting the eNB 20 to send eNB information to the MME 30 (step S107). For example, the E-SMLC 40 may send the eNB information sending request to the MME 30 using a "Connectionless Information Message." In such a case, the "Connectionless Information Message" includes a "Global eNB ID" for identifying the eNB 20 and an LPPa message in which the above eNB information sending request is set.

The MME 30 transfers the eNB information sending request received from the E-SMLC 40 to the eNB 20 (step S108). For example, the E-SMLC 40 may transfer the eNB information sending request to the eNB 20 using "Downlink non UE associated LPPa Transport." In such a case, the "Downlink non UE associated LPPa Transport" includes the LPPa message sent from the E-SMLC 40 to the MME 30 through "Connectionless Information Message", in which the eNB information sending request is set. In this case, a "Global eNB ID" for identifying the eNB 20 may also be included.

The eNB 20 sets the eNB information in the LPPa message in response to the eNB information sending request received from the MME 30 (step S109). As described above, the eNB information includes a cell identifier, longitude; latitude, tilt angle, error radius or the like of the eNB 20.

The eNB 20 sends the eNB information to the MME 30 in response to the eNB information sending request received from the MME 30 (step S110). For example, the eNB 20 may also send the eNB information to the MME 30 using the "Uplink non UE Associated LPPa Transport." In such a case, the "Uplink non UE Associated LPPa Transport" includes the LPPa message in which the eNB information of the eNB 20 is set.

The MME 30 transfers the eNB information received from the eNB 20 to the E-SMLC 40 (step S111). For example, the MME 30 may transfer the eNB information to the E-SMLC 40 using a "Connectionless Information message." In such a case, the "Connectionless Information message" includes the LPPa message received from the eNB 20 in which the eNB information is set.

The E-SMLC 40 acquires the eNB information sent from the MME 30 and updates the eNB information stored in the eNB information storage section 41 so as to reflect the acquired eNB information (step S112).

The E-SMLC 40 notifies the MME 30 that update processing of the eNB information storage section 41 has been completed (step S113). For example, the E-SMLC 40 may notify the MME 30 of the completion of update processing using "eNodeB Configuration Data Update Complete." Furthermore, the present signal may not be sent.

FIG.5 is a sequence diagram illustrating an operation of acquiring eNB information from the eNB 20 whose setting contents have been changed. As shown in FIG.5, when the setting contents such as a cell identifier, longitude, latitude, tilt angle, error radius or the like of the eNB 20 are changed, eNB information containing at least one of the cell identifier, longitude, latitude, tilt angle, error radius or the like of the eNB 20 is updated (step S201).

The eNB 20 sends an eNB information update notification for notifying that the eNB information has been updated to the MME 30 (step S202). The eNB 20 may send the NB information update notification to the MME 30 using, for example, "eNodeB Configuration Update." In such a case, the "eNodeB Configuration Update" includes a "Global eNB ID" for identifying the eNB 20 and an LCS-related information updating/not updating bit. Here, the LCS-related information updating/not updating bit is a bit indicating that the eNB information has been updated. For example, when the LCS-related information updating/not updating bit set to "ON" indicate that the eNB information has been updated and the LCS-related information updating/not updating bit set to "OFF" indicates that the eNB information has not been updated.

The MME 30 decides whether the eNB information in the eNB 20 has been updated or not (step S203). To be more specific, the MME 30 decides whether the eNB information in the eNB 20 has been updated or not based on the LCS-related information updating/not updating bit included in the "eNodeB Configuration Update" from the eNB 20.

The MME 30 sends "eNodeB Configuration Update Ack" to the eNB 20 (step S204).

When it is decided in step S203 that the eNB information in the eNB 20 has been updated, the MME 30 transfers the eNB information update notification received from the eNB 20 to the E-SMLC 40 (step S205). For example, the eNB 20 may transfer the above eNB information update notification to the E-SMLC 40 using "eNodeB Configuration Data Update" including a "Global eNB ID" for identifying the eNB 20.

Since steps S206 to S213 in FIG.5 are similar to steps S106 to S113 in FIG.4, descriptions thereof will be omitted.

### <Operation/effect>

According to the mobile communication system according to the first embodiment, the E-SMLC 40 can easily acquire eNB information from the eNB 20 which has been newly installed or whose setting contents have been changed, and update the eNB information stored in the eNB information storage section 41 based on the acquired eNB information. Therefore, the E-SMLC 40 can maintain the eNB information stored in the eNB information storage section 41 updated to the latest version and more accurately perform cell-based positioning processing for the UE 10 performed based on such eNB information.

### [Modification example 1]

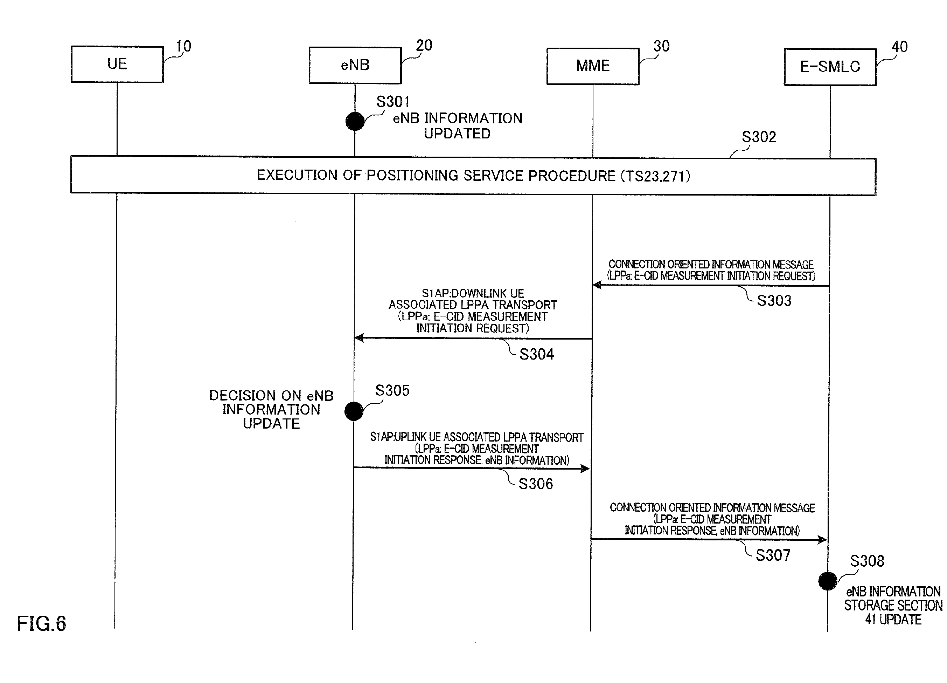

Next, modification example 1 of the first embodiment will be described. Modification example 1 will describe an example where eNB information acquiring processing is performed during positioning of the UE 10 by focusing on differences from the first embodiment. FIG.6 is a sequence diagram illustrating an eNB information acquiring operation according to modification example 1.

As shown in FIG.6, when the eNB 20 is newly installed or setting contents thereof are changed, eNB information is newly set or updated in the eNB 20 (step S301).

When a positioning event occurs in one of the UE 10 and network side apparatus (e.g., LCS client 60, eNB 20 or the like in FIG.1), the E-SMLC 40 starts a positioning procedure of the UE 10 (step S302).

In the positioning procedure of the UE 10, the E-SMLC 40 sends a "Connection Oriented Information message" to the MME 30 (step S303). Such a "Connection Oriented Information message" includes LPPa data in which "E-CID MEASUREMENT INITIATION REQUEST" which is a positioning-related signal is set. When the E-SMLC 40 performs cell-based positioning processing, the "E-CID MEASUREMENT INITIATION REQUEST" is used to request information necessary to calculate position information from the eNB 20. For example, the E-SMLC 40 requests from the eNB 20, an ID for identifying a serving cell or neighboring cell, RSRP and RSRQ of the serving cell or neighboring cell and Rx-Tx Time Difference information used to calculate RTT between the UE 10 and the eNB 20 and indicating a time difference between transmission and reception in the serving cell.

The MME 30 sends a S1AP signal "DOWNLINK UE ASSOCIATED LPPA TRANSPORT" to the eNB 20 in the positioning procedure of the UE 10 (step S304). Such "DOWNLINK UE ASSOCIATED LPPA TRANSPORT" includes an LPPa message in which an "E-CID MEASUREMENT INITIATION REQUEST" from the E-SMLC 40 is set.

The eNB 20 decides whether or not the eNB information is set or updated in response to the "E-CID MEASUREMENT INITIATION REQUEST" from the MME 30 (step S305).

In the present sequence diagram, since eNB information has newly been set or updated in the eNB 20 (step S301), the eNB 20 sets the set or updated eNB information in the LPPa message. Furthermore, the eNB 20 sets an "E-CID MEASUREMENT INITIATION RESPONSE" which is a response signal to the "E-CID MEASUREMENT INITIATION REQUEST" from the MME 30 in the LPPa message. The eNB 20 sends an S1AP signal "UPLINK UE ASSOCIATED LPPA TRANSPORT" including the LPPa message in which the set or updated eNB information and "E-CID MEASUREMENT INITIATION RESPONSE" are set to the MME 30 (step S306).

The MME 30 sends a "Connection Oriented Information message" to the E-SMLC 40 in response to the above S1AP signal from the eNB 20 (step S307). Such a "Connection Oriented Information message" includes an LPPa message in which the eNB information from the eNB 20 and the "E-CID MEASUREMENT INITIATION RESPONSE" are set.

The E-SMLC 40 acquires the eNB information sent from the MME 30 and updates eNB information stored in the eNB information storage section 41 based on the acquired eNB information (step S308). Thus, the E-SMLC 40 acquires eNB information from the eNB 20 which has been newly installed or whose setting contents have been changed in the positioning procedure for the UE 10, and can thereby reduce the number of signals used to acquire eNB information.

### [Modification example 2]

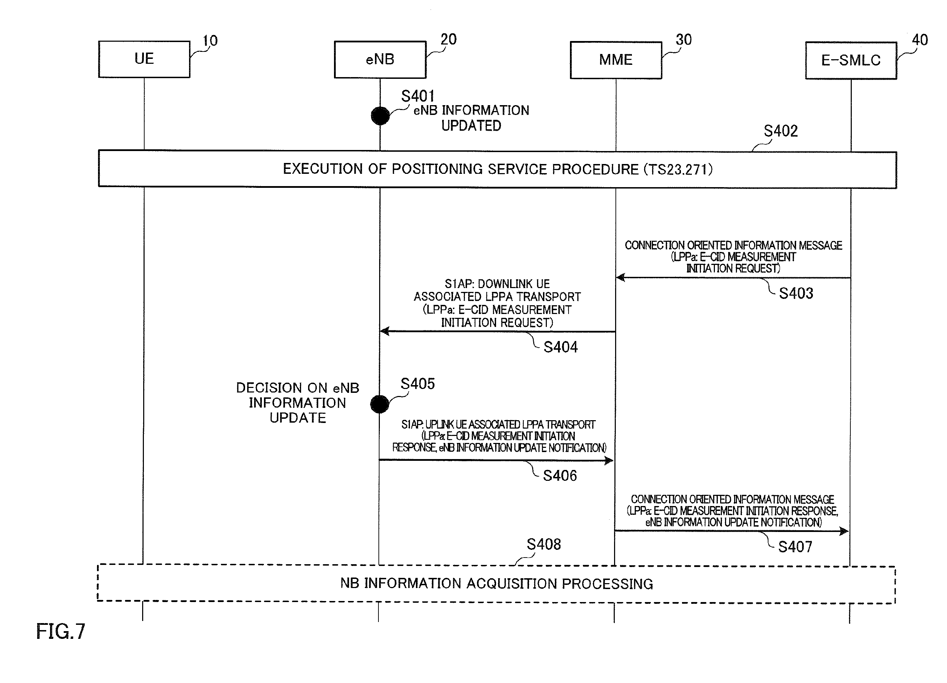

Next, modification example 2 of the first embodiment will be described. Modification example 2 will describe another example where eNB information acquiring processing is performed during positioning of the UE 10 by focusing on differences from modification example 1. FIG.7 is a sequence diagram illustrating an eNB information acquiring operation according to modification example 2. Since steps S401 to S405 in FIG.7 are similar to steps S301 to S305 in FIG.6, descriptions thereof will be omitted.

In FIG.7, since eNB information has been newly set or updated (step S401), the eNB 20 sets an eNB information update notification indicating that eNB information has been newly set or updated in an LPPa message. The eNB 20 sends an S1AP signal "UPLINK UE ASSOCIATED LPPA TRANSPORT" including an LPPa message in which the eNB information update notification and "E-CID MEASUREMENT INITIATION RESPONSE" are set to the MME 30 (step S406).

The MME 30 sends a "Connection Oriented Information message" to the E-SMLC 40 in response to the above S1AP signal from the eNB 20 (step S407). Such a "Connection Oriented Information message" includes LPPa data in which the eNB information update notification from the eNB 20 and "E-CID MEASUREMENT INITIATION RESPONSE" are set.

The E-SMLC 40 performs eNB information acquiring processing for the eNB 20 in response to the eNB information update notification from the MME 30 (step S408). To be more specific, processes similar to those in steps S106 to S113 in FIG.4 and steps S206 to S213 in FIG.5 are performed. Thus, the E-SMLC 40 acquires eNB information from the eNB 20 which has been newly installed or whose setting contents have been changed in the positioning procedure for the UE 10, and can thereby reduce the number of signals used to acquire eNB information.

### [Second embodiment]

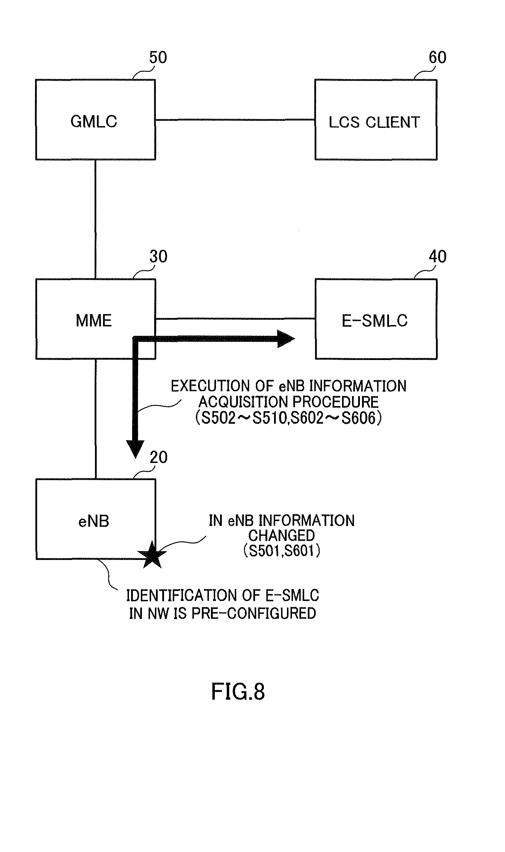

A case has been described in the first embodiment where when the eNB 20 has no identification information of the E-SMLC 40, the E-SMLC 40 acquires eNB information from the eNB 20 which has been newly installed or whose setting contents have been changed. A second embodiment will describe a case where when the eNB 20 is notified of identification information of the E-SMLC 40 beforehand, the E-SMLC 40 acquires eNB information from the eNB 20 which has been newly installed or whose setting contents have been changed. An eNB information acquiring operation in a mobile communication system according to the second embodiment will be described with reference to FIG.8 to FIG.10.

FIG.8 is a schematic diagram illustrating the eNB information acquiring operation according to the second embodiment. As shown in FIG.8, in the second embodiment, the eNB 20 is notified beforehand of an "E-SMLC ID" (positioning apparatus identification information) which is identification information of the E-SMLC 40 and stores the E-SMLC ID. As for the identification information of the E-SMLC 40, for example, the eNB 20 may store the E-SMLC 40 that has received a positioning request signal by the time update information should be notified. For this reason, in the second embodiment, the eNB 20 itself can specify the E-SMLC 40 and send eNB information update notification and eNB information, instead of the E-SMLC 40 specified by the MME 30 as in the case of the first embodiment.

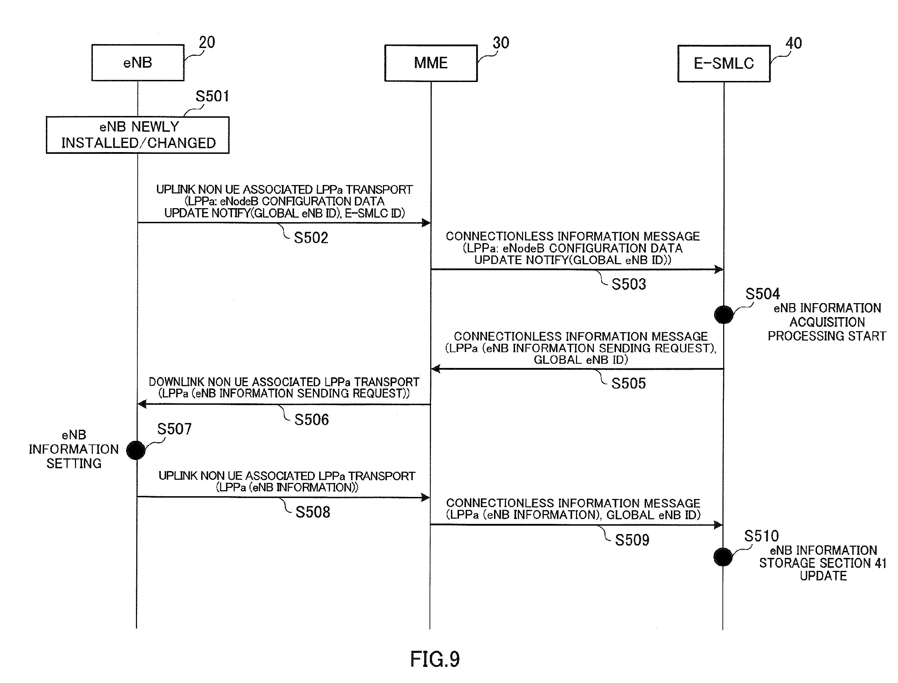

FIG.9 is a sequence diagram illustrating a first eNB information acquiring operation according to the second embodiment. As shown in FIG.9, when the eNB 20 is newly installed or setting contents thereof are changed, the eNB information in the eNB 20 is newly set or updated (step S501).

The eNB 20 sends an eNB information update notification to the E-SMLC 40 identified by an "E-SMLC ID" which is stored beforehand (steps S502 and S503). For example, in FIG.9, the eNB 20 sends the above eNB information update notification using "eNodeB Configuration Data Update Notify" which is an LPPa message. The "eNodeB Configuration Data Update Notify" includes a "Global eNB ID" for identifying the eNB 20. When set in "eNodeB Configuration Data Update Notify" which is an LPPa message as an eNB information update notification, the eNB 20 sends "Uplink non UE associated LPPa Transport" including the LPPa message and "E-SMLC ID" of the destination E-SMLC 40 to the MME 30. Furthermore, the MME 30 sends a "Connectionless Information message" including the above LPPa data from the eNB 20 to the E-SMLC 40.

Since processes in steps S504 to S510 in FIG.9 are similar to the processes in steps S106 to S112 in FIG.4 and steps S206 to S212 in FIG.5, descriptions thereof will be omitted.

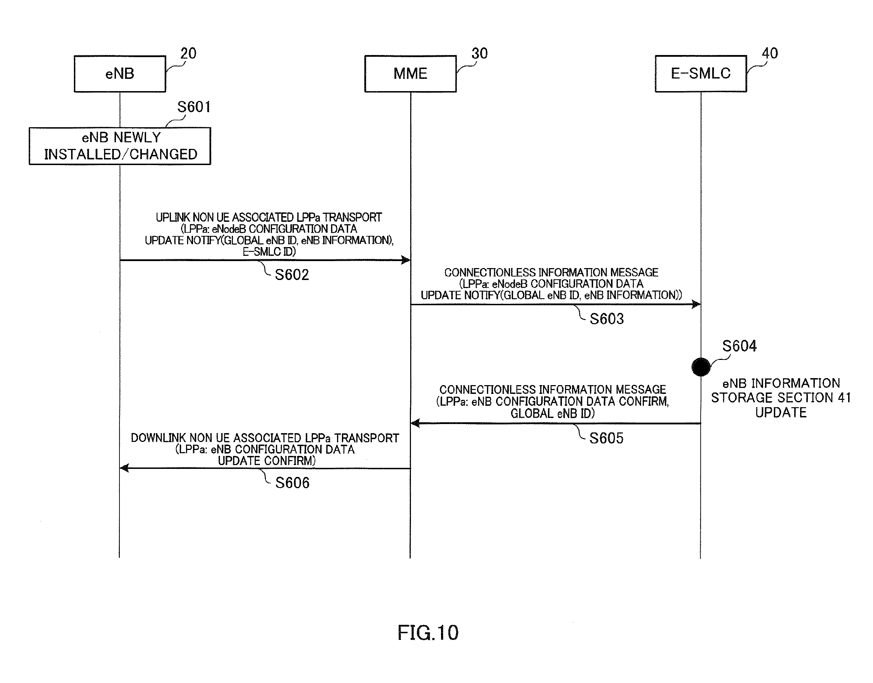

FIG.10 is a sequence diagram illustrating a second eNB information acquiring operation according to the second embodiment. As shown in FIG.10, when the eNB 20 is newly installed or setting contents thereof are changed, eNB information in the eNB 20 is newly set or updated (step S601).

The eNB 20 sends eNB information to the E-SMLC 40 identified by an "E-SMLC ID" stored beforehand (steps S602 and S603). For example, in FIG.10, the eNB 20 sends the eNB information by setting it in "eNodeB Configuration Data Update Notify" which is an LPPa message. When sending "eNodeB Configuration Data Update Notify" which is an LPPa message in which eNB information is set, the eNB 20 sends "Uplink non UE associated LPPa Transport" including the LPPa message and an "E-SMLC ID" for identifying the destination E-SMLC 40 to the MME 30. Furthermore, the MME 30 sends a "Connectionless Information message" including the above LPPa message from the eNB 20 to the E-SMLC 40.

The E-SMLC 40 updates the eNB information stored in the eNB information storage section 41 based on the eNB information set in "eNodeB Configuration Data Update Notify" which is an LPPa message (step S604).

The E-SMLC 40 notifies the eNB 20 that the eNB information storage section 41 has been updated (steps S605 and S606). For example, the E-SMLC 40 sends such a notification using "eNB Configuration Data Update Confirm." To be more specific, the E-SMLC 40 sends a "Connectionless Information Message" including the "eNB Configuration Data Update Confirm" which is an LPPa message to the MME 30. Furthermore, the MME 30 sends "Downlink non UE associated LPPa Transport" including the LPPa message received from the E-SMLC to the eNB 20.

### [Other embodiments]

The present invention has been described in detail using the aforementioned embodiments, but it is apparent to those skilled in the art that the present invention is not limited to the embodiments described in the present DESCRIPTION. As described so far, the present invention can be implemented as modified or altered embodiments without departing from the spirit and scope of the present invention defined by the description of the scope of patent claims. Therefore, the description of the present DESCRIPTION is meant to be illustrative, and by no means meant to have any limitative meaning to the present invention.

The present application is based on Japanese Patent Application No.2010-172803 filed on July 30, 2010, entire content of which is expressly incorporated by reference herein.

## Claims

1. A mobile communication method for a positioning apparatus including a storage section configured to store radio base station information indicating a setting content of a radio base station, to perform positioning processing for a user terminal located in a cell formed by the radio base station based on the radio base station information stored in the storage section, the mobile communication method comprising the steps of:
acquiring, at the positioning apparatus, radio base station information sent from a radio base station, which has been newly installed or whose setting content has been changed; and
updating, at the positioning apparatus, the radio base station information stored in the storage section so as to reflect the acquired radio base station information.

2. The mobile communication method according to claim 1, further comprising a step of sending, at the positioning apparatus, a sending request signal for requesting the radio base station, which has been newly installed or whose setting content has been changed, to send the radio base station information, wherein
in the step of acquiring the radio base station information, the positioning apparatus acquires the radio base station information sent from the radio base station in response to the sending request signal.

3. The mobile communication method according to claim 2, further comprising a step of sending, at a mobile management apparatus, when detecting that a radio base station has been newly installed under the control of the mobile management apparatus or a setting content of a radio base station under the control of the mobile management apparatus has been changed, an update notification signal of radio base station information of the radio base station to the positioning apparatus, wherein
in the step of sending the sending request signal, the positioning apparatus sends the sending request signal to the radio base station under the control of the mobile management apparatus in response to the update notification signal from the mobile management apparatus.

4. The mobile communication method according to claim 2, further comprising a step of sending, at a mobile management apparatus, when receiving an update notification signal of radio base station information of the radio base station together with a response signal to a positioning-related signal from the positioning apparatus of the radio base station under the control of the mobile management apparatus, the response signal and the update notification signal to the positioning apparatus, wherein:
in the step of sending the sending request signal, the positioning apparatus sends the sending request signal to the radio base station in response to the update notification signal from the mobile management apparatus.

5. The mobile communication method according to claim 2, further comprising a step of sending, at a radio base station which has been newly installed or whose setting content has been changed, an update notification signal of radio base station information of the radio base station to a positioning apparatus identified by positioning apparatus identification information stored beforehand, wherein:
in the step of sending the sending request signal, the positioning apparatus sends the sending request signal to the radio base station in response to the update notification signal from the radio base station.

6. The mobile communication method according to claim 1, further comprising a step of sending, at a mobile management apparatus, when receiving from a radio base station under the control of the mobile management apparatus, radio base station information of the radio base station together with a response signal to a positioning-related signal from the positioning apparatus, the response signal and the radio base station information to the positioning apparatus, wherein:
in the step of acquiring the radio base station information, the positioning apparatus acquires the radio base station information sent together with the response signal from the mobile management apparatus.

7. The mobile communication method according to claim 1, further comprising a step of sending, at a radio base station which has been newly installed or whose setting content has been changed, radio base station information to a positioning apparatus identified by positioning apparatus identification information stored in the radio base station, wherein:
in the step of acquiring the radio base station information, the positioning apparatus acquires the radio base station information sent from the radio base station.

8. The mobile communication method according to any one of claims 1 to 7, wherein the radio base station information includes at least one of a cell identifier, latitude, longitude, tilt angle and error radius of the radio base station.

9. A positioning apparatus including a storage section configured to store radio base station information indicating a setting content of a radio base station and a positioning processing section configured to perform positioning processing for a user terminal located in a cell formed by the radio base station based on the radio base station information stored in the storage section, the positioning apparatus comprises:
an acquiring section configured to acquire radio base station information sent from a radio base station, which has been newly installed or whose setting content has been changed, and
an updating section configured to update the radio base station information stored in the storage section so as to reflect the acquired radio base station information.

10. The positioning apparatus according to claim 9, further comprising a sending section configured to send a sending request signal for requesting the radio base station, which has been newly installed or whose setting content has been changed, to send the radio base station information, wherein:
the acquiring section is configured to acquire the radio base station information sent from the radio base station in response to the sending request signal.

11. The positioning apparatus according to claim 10, further comprising a receiving section configured to receive an update notification signal for radio base station information of a radio base station under the control of a mobile management apparatus from the mobile management apparatus, wherein:
the sending section is configured to send the sending request signal to the radio base station under the control of the mobile management apparatus in response to the update notification signal received by the receiving section.

12. The positioning apparatus according to claim 10, further comprising a receiving section configured to receive an update notification signal of radio base station information of a radio base station which has been newly installed or whose setting content has been changed, the update notification signal sent from the radio base station to the positioning apparatus identified by positioning apparatus identification information stored in the radio base station, wherein:
the sending section is configured to send the sending request signal to the radio base station in response to the update notification signal received by the receiving section.

13. The positioning apparatus according to claim 9, further comprising a receiving section configured to receive, when a mobile management apparatus receives radio base station information together with a response signal to a positioning-related signal from the positioning apparatus from a radio base station under the control of the mobile management apparatus, the radio base station information together with the response signal from the mobile management apparatus, wherein:
the acquiring section is configured to acquire the radio base station information received by the receiving section.

14. The positioning apparatus according to claim 9, further comprising a receiving section configured to receive radio base station information sent from a radio base station which has been newly installed or whose setting content has been changed, to the positioning apparatus identified by positioning apparatus identification information stored in the radio base station, wherein:
the acquiring section is configured to acquire the radio base station information received by the receiving section.

15. The positioning apparatus according to any one of claims 9 to 14, wherein the radio base station information includes at least one of a cell identifier, latitude, longitude, tilt angle and error radius of the radio base station.

16. A radio base station in a mobile communication system in which a positioning apparatus including a storage section configured to store radio base station information performs positioning processing for a user terminal based on the radio base station information stored in the storage section, wherein:
upon detecting that the radio base station has been newly installed or a setting content thereof has been changed, the radio base station is configured to send radio base station information indicating the setting content of the radio base station to the positioning apparatus.

17. The radio base station according to claim 16, wherein:
upon detecting that the radio base station has been newly installed or a setting content thereof has been changed, the radio base station is configured to send an update notification signal of the radio base station information to a positioning apparatus identified by positioning apparatus identification information stored beforehand, and
send the radio base station information to the positioning apparatus in response to a sending request signal for requesting to send the radio base station information, the sending request signal sent from the positioning apparatus in response to the update notification signal.

18. The radio base station according to claim 16, wherein upon detecting that the radio base station has been newly installed or setting content thereof has been changed, the radio base station is configured to send the radio base station information to a positioning apparatus identified by positioning apparatus identification information stored beforehand.
